(19) Europäisches Patentamt
European Patent Office
Office européen des brevets

(11) **EP 2 098 873 A2**

(12) **EUROPÄISCHE PATENTANMELDUNG**

(43) Veröffentlichungstag:
**09.09.2009 Patentblatt 2009/37**

(51) Int Cl.:
*G01P 3/486* (2006.01)   *G01P 3/489* (2006.01)

(21) Anmeldenummer: **09002490.2**

(22) Anmeldetag: **21.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **07.03.2008   DE 102008013288**

(71) Anmelder: **BBH Systems GmbH**
**92637 Weiden i.d. Opf. (DE)**

(72) Erfinder:
• **Bauer, Gerhard**
  **92711 Parkstein (DE)**
• **Bodensteiner, Wolfgang**
  **92637 Weiden (DE)**

(74) Vertreter: **Graf, Helmut et al**
**Patentanwälte**
**Graf Wasmeier Glück**
**Postfach 10 08 26**
**93008 Regensburg (DE)**

(54) **Verfahren sowie Vorrichtung zur Ermittlung der Geschwindigkeit, insbesondere der Drehgeschwindigkeit eines umlaufenden Maschinenelementes**

(57)    Bei einem Verfahren zur Ermittlung der Geschwindigkeit, insbesondere Geschwindigkeit einer umlaufenden Welle, durch Erfassung von voneinander beabstandeten Wegstreckenelementen und unter Berücksichtigung der von einem Taktgeber gelieferten Zeit erfolgt in einem Geschwindigkeitsbereich oberhalb einer Grenzgeschwindigkeit nach einem Frequenzmessverfahren und in einem Geschwindigkeitsbereich unterhalb der Grenzgeschwindigkeit die Ermittlung der Geschwindigkeit nach einem Zeitmessverfahren.

FIG.1

EP 2 098 873 A2

**Beschreibung**

Die Erfindung bezieht sich auf ein Verfahren gemäß Oberbegriff Patentanspruch 1 sowie auf eine Vorrichtung gemäß Oberbegriff Patentanspruch 8.

Aufgabe der Erfindung ist es, ein Verfahren aufzuzeigen, mit dem über einen großen Geschwindigkeitsbereich die Ermittlung oder Messung der Geschwindigkeit, insbesondere auch die Ermittlung oder Messung der Geschwindigkeit einer umlaufenden Welle oder eines umlaufenden Maschinenelementes mit hoher Genauigkeit und geringem Fehler möglich ist.

Zur Lösung dieser Aufgabe ist ein Verfahren entsprechend dem Patentanspruch 1 ausgebildet. Eine Vorrichtung zum Durchführen dieses Verfahrens ist Gegenstand des Patentanspruchs 8.

Eine Besonderheit der Erfindung besteht darin, dass in einem oberen Geschwindigkeitsbereich, d.h. in einem Geschwindigkeitsbereich oberhalb einer Grenzgeschwindigkeit die Ermittlung der tatsächlichen Geschwindigkeit durch ein Frequenzmessverfahren und in einem unteren Geschwindigkeitsbereich, d.h. in einem Geschwindigkeitsbereich unterhalb einer Grenzgeschwindigkeit durch ein Zeitmessverfahren erfolgt. Bei Erreichen dieser Grenzgeschwindigkeit erfolgt das Umschalten zwischen dem Frequenzmessverfahren und dem Zeitmessverfahren, wobei die Grenzgeschwindigkeit bzw. der Umschaltpunkt bevorzugt oberhalb einer Mindestanzahl von bei der Messung oder Abtastung erfassten Wegstreckenelementen oder einer Mindestanzahl von Impulsen, die von diesen Wegstreckenelementen abgeleitet werden, liegt. Diese Mindestanzahl von erfassten Wegstreckenelementen oder von hieraus abgeleiteten Impulsen beträgt beispielsweise wenigstens Drei, bevorzugt wenigstens Vier.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

In Weiterbildung ist das erfindungsgemäße Verfahren beispielsweise so ausgeführt,

dass die Wegstreckenelemente jeweils denselben Abstand voneinander aufweisen, und/oder

dass die Wegstreckenelemente von Inkrementen oder deren Flanken eines Gebers oder Encoders sind, und/oder

dass die Wegstreckenelemente an einem umlaufend angetriebenen Inkremententräger, beispielsweise an einer umlaufend angetriebenen Scheibe oder an einer umlaufend angetriebenen Welle vorgesehen sind, und/oder

dass bei der Ermittlung der Geschwindigkeit mit dem Frequenzmessverfahren die Anzahl der Wegstreckenelemente innerhalb eines vorgegebenen Zeitfensters oder Messintervalls ermittelt und hieraus unter Berücksichtigung der Länge des Messintervalls und des Abstandes zwischen den Wegstreckenelementen die Geschwindigkeit bestimmt wird,

und/oder

dass bei der Ermittlung der Geschwindigkeit mit dem Zeitmessverfahren die Zeit zwischen einem anfänglichen Wegstreckenelement und einem zeitlich folgenden Wegstreckenelement ermittelt und aus dieser gemessenen Zeit unter Berücksichtigung des Abstandes der Wegstreckenelemente und der Anzahl der Wegstreckenelemente die Geschwindigkeit bestimmt wird,

und/oder

dass die jeweilige Messung synchron mit der Fassung eines Wegstreckenelementes begonnen wird,

und/oder

dass das Umschalten von dem Frequenzmessverfahren auf das Zeitmessverfahren dann erfolgt, wenn die Anzahl der je Messintervall erfassten Wegstreckenelemente oder der hierbei erzeugten Impulse noch größer als Drei ist,

und/oder

dass beim Erfassen oder Zählen der Wegstreckenelemente von jedem Inkrement jeweils wenigstens ein Impuls gebildet wird,

und/oder

dass beim Erfassen oder Zählen der Wegstreckenelemente von jedem Inkrement jeweils zwei Impulse gebildet werden,

dass der Abstand der Inkremente gleich deren Breite ist, und/oder

dass die Wegstreckenelemente berührungslos mit einer Sensoreinheit,

beispielsweise mit einer Lichtstrecke abgetastet werden, wobei die vorgenannten Merkmale des Verfahrens jeweils einzeln oder in beliebiger Kombination vorgesehen sein können.

In Weiterbildung ist das erfindungsgemäße Vorrichtung beispielsweise so ausgeführt,

dass die Wegstreckenelemente jeweils denselben Abstand voneinander aufweisen, und/oder

dass die Wegstreckenelemente von Inkrementen oder deren Flanken eines Gebers oder Encoders sind,

und/oder

dass die Wegstreckenelemente an einem umlaufend angetriebenen Inkremententräger, beispielsweise an einer umlaufend angetriebenen Scheibe oder an einer umlaufend angetriebenen Welle vorgesehen sind,

und/oder

dass bei der Ermittlung der Geschwindigkeit mit dem Frequenzmessverfahren die Anzahl der Wegstreckenelemente innerhalb eines vorgegebenen Zeitfensters oder Messintervalls ermittelt und hieraus unter Berücksichtigung der Länge des Messintervalls ($T_M$) und des Abstandes zwischen den Wegstreckenelementen die Geschwindigkeit bestimmt wird,

und/oder

dass bei der Ermittlung der Geschwindigkeit mit dem Zeitmessverfahren die Zeit zwischen einem anfänglichen Wegstreckenelement und einem zeitlich folgenden Wegstreckenelement ermittelt und aus dieser gemessenen Zeit unter Berücksichtigung des Abstandes der Wegstreckenelemente und der Anzahl der Wegstreckenelemente die Geschwindigkeit bestimmt wird, und/oder

dass die jeweilige Messung synchron mit der Fassung eines Wegstreckenelementes begonnen wird, und/oder

dass das Umschalten von dem Frequenzmessverfahren auf das Zeitmessverfahren dann erfolgt, wenn die Anzahl der je Messintervall erfassten Wegstreckenelemente oder der hierbei erzeugten Impulse noch größer als Drei ist, und/oder

dass beim Erfassen oder Zählen der Wegstreckenelemente von jedem Inkrement jeweils wenigstens ein Impuls gebildet wird, und/oder

dass beim Erfassen oder Zählen der Wegstreckenelemente von jedem Inkrement jeweils zwei Impulse gebildet werden, und/oder

dass der Abstand der Inkremente gleich deren Breite ist, und/oder

dass die Wegstreckenelemente berührungslos mit einer Sensoreinheit, beispielsweise mit einer Lichtstrecke abgetastet werden, wobei die vorgenannten Merkmale der Vorrichtung jeweils einzeln oder in beliebiger Kombination vorgesehen sein können.

Die Erfindung wird im Folgenden anhand der Figuren an einem Ausführungsbeispiel näher erläutert. Es zeigen:

Fig. 1 in sehr vereinfachter Darstellung eine Einrichtung zur Messung der Geschwindigkeit, beispielsweise der Drehgeschwindigkeit einer Welle eines Antriebs oder einer mit einem Antrieb verbundenen Encoder-Welle;

Fig. 2 in einem Diagramm den schematischen Fehlerverlauf bei der Ermittlung der Geschwindigkeit mit Hilfe des Frequenzmessverfahrens bzw. mit Hilfe des Zeitmessverfahrens.

Die in den Figuren allgemein mit 1 bezeichnete Vorrichtung dient zur Geschwindigkeitsmessung (Drehgeschwindigkeit) einer Welle, beispielsweise einer Welle eines Encoders (Winkelgebers), die um die Wellenachse in gleichmäßigen Winkelabständen verteilt mit einer Vielzahl von abtastbaren Inkrementen 2 versehen ist, welche durch ihre gleichmäßige Verteilung einen festen Abstand $\Delta s$ voneinander aufweisen und deren Breite oder Flankenabstand in Dreh- oder Abtastrichtung ebenfalls $\Delta s$ beträgt.

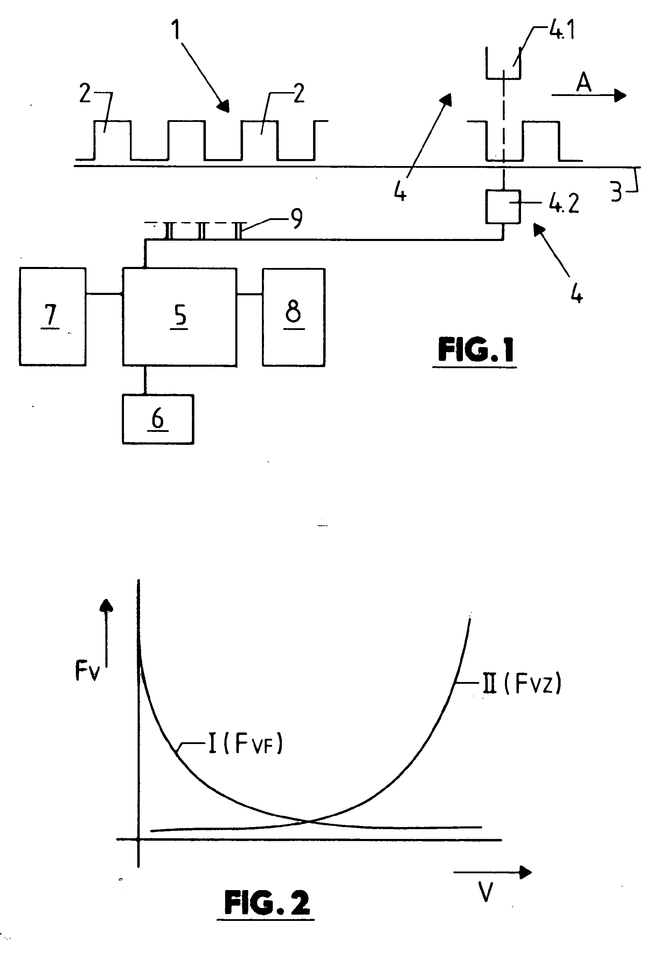

In der Figur 1 sind die Inkremente 2 der einfacheren Darstellung wegen jeweils als Impulse auf einer geradlinigen Strecke wiedergegeben, welch letztere eine Abwicklung des Umfangs der umlaufenden Welle bzw. des Winkelgebers ist. Die Breite der Impulse ist gleich dem Abstand der Impulse und entsprich jeweils der Weglänge $\Delta s$. Die Drehrichtung der Welle ist in der Figur 1 mit dem Pfeil A angegeben.

Zur Abtastung der Inkremente 2 dient ein Sensor 4, der beispielsweise von einer Lichtschranke bestehend aus einer Lichtquelle 4.1 und einem Lichtsensor 4.2 gebildet ist und der Bestandteil der Mess- und Auswertelektronik der Vorrichtung 1 ist, die ihrerseits zumindest aus einem Prozessor 5 besteht, dem ein Zeit- oder Taktgeber 6 sowie ein Programm- und Datenspeicher 7 zugeordnet sind und der an einem Ausgang bzw. an einer Schnittstelle 8 zumindest ein der jeweils gemessenen Geschwindigkeit entsprechendes Signal liefert.

Bei umlaufender Welle 3 liefert das Sensorelement 4.2 an seinem Ausgang aufgrund der sich an der Sensoreinheit 4 vorbeibewegenden Inkremente 2 Impulse 9, die als Impulsfolge dem Prozessor 5 zugeführt werden und aus der der Prozessor u.a. unter Berücksichtigung des von dem Taktgeber 6 gelieferten Zeit- oder Taktsignals die Geschwindigkeit der Welle 3 ermitteln kann. Jeder Impuls 9 entspricht einer aufsteigenden oder absteigenden Flanke der Inkremente.

Die Besonderheit der Vorrichtung 1 besteht darin, dass in einem oberen Geschwindigkeitsbereich der Welle 3 die Geschwindigkeit oder hieraus abgeleitete Größen, z.B. Beschleunigung nach einem Frequenzmessverfahren ermittelt wird, d.h. es wird die Anzahl N der Impulse 9 gezählt, die in einem vorgegebenen Messzyklus bzw. in einer vorgegebenen Messzeit $T_M$ auftreten, sodass die Geschwindigkeit V sich nach folgender Gleichung bestimmt:

$$V = (N * \Delta s) / (T_M)$$

oder

$$V = (N * \Delta s) / (k * T_{Cl})$$

Hierbei sind k eine angenommene Anzahl von Abtastungen pro Messzyklus und $T_{Cl}$ die Zeit zwischen jeweils auf einander folgenden Abtastungen.

Da die Messzeit $T_M$ vorgegeben ist wird bei dem Frequenzmessverfahren der Fehler bei der Ermittlung der Geschwindigkeit V umso größer, je kleiner die gemessene Geschwindigkeit ist. In der Figur 2 ist der Verlauf des Fehlers $F_{VF}$ für die Ermittlung der Geschwindigkeit mit dem Frequenzmessverfahren als Kurve I dargestellt.

Ist m die Mindestzahl der in einem Messzyklus bzw. in der Messzeit $T_M$ notwendigen Impulse 9, so ergibt sich für den Fehler $F_{VF}$ für die Ermittlung der Geschwindigkeit V nach dem Frequenznetzverfahren:

$$F_{VF} = \Delta s / (m * \Delta s) = 1 / m$$

Bei m = 4 beträgt der Fehler $F_{VF}$ bereits 25%. Die kleinste nach dem Frequenzmessverfahren noch zu ermittelnde Geschwindigkeit beträgt dann

$$V_{Fmin} = m / (k * T_{Cl} * R_{Enc})$$

Hierbei ist $R_{Enc}$ die Auflösung des Winkelgebers, d.h. die Anzahl der Inkremente 2 pro Umfang bzw. Umdrehung.

Bei Geschwindigkeiten unterhalb dieser Grenzgeschwindigkeit $V_{Fmin}$ erfolgt die Messung nach dem Zeitmessverfahren. Hierfür gilt:

$$V = \Delta s / (N * T)$$

Hierbei sind wiederum $\Delta$s wieder der diskrete bzw. feste Abstand zwischen zwei Inkrementen 2, N die Anzahl der Impulse 9 während der Messzeit und T die Zeit, die zwischen einem ersten, den Messzyklus startenden Impuls 9 und einem den Messzyklus beendenden Impuls. In der Figur 2 ist in der Kurve II der Verlauf des Fehlers Fvz bei der Ermittlung der Geschwindigkeit mit dem Zeitmessverfahren tendenziell dargestellt, d.h. bei höherer Geschwindigkeit steigt dieser Fehler Fvz an.

Die mit dem Zeitmessverfahren maximal ermittelbare Geschwindigkeit beträgt bei einer Messung, die sowohl die aufsteigende Flanke als auch die absteigende Flanke jedes Impulses 9 berücksichtigt,

$$V_{Zmax} \leqq N / (2 * R_{Enc})$$

wobei $R_{Enc}$ wiederum die Auflösung des Winkelgebers bzw. die Anzahl der Inkremente 2 pro Umdrehung ist, und zwar. Der Fehler Fvz beträgt bei der Grenzgeschwindigkeit etwa bei 50 %.

Die Vorrichtung 1 bzw. der Mikroprozessor 5 sind beispielsweise so gesteuert, das bei einer vorgegebenen Anzahl Num der Impulse 9 ein Umschalten von dem Frequenzmessverfahren auf das Zeitmessverfahren und umgekehrt erfolgt, sodass die tatsächliche Geschwindigkeit über einen weiten Bereich zwischen extrem niedriger Geschwindigkeit und sehr hoher Geschwindigkeit mit geringem Fehler ermittelt werden kann. Grundsätzlich gilt, dass der Faktor Num einen vorgegebenen unteren Grenzwert nicht überschreiten soll, da mit zunehmenden Num der Fehler bei der Messung bzw. Ermittlung der Geschwindigkeit V abnimmt. Ein Wert Num = 4 führt zu nahezu optimalen Ergebnissen. Die Vorrichtung ist beispielsweise eine von dem Antrieb der Welle 3 und/oder von der Steuerung dieses Antriebs unabhängige bzw. eigenständige Vorrichtung.

Die Erfindung wurde voranstehend an einem Ausführungsbeispiel beschrieben. Es versteht sich, dass Änderungen sowie Abwandlungen möglich sind. So kann die Vorrichtung 1 selbstverständlich auch zur Ermittlung der Beschleunigung sowie zur Erfassung der jeweiligen Ist-Position eines Antriebs usw. dienen.

## Bezugszeichenliste

| | |
|---|---|
| 1 | Vorrichtung zur Messung bzw. Ermittlung der Geschwindigkeit |
| 2 | Inkrement |
| 3 | Welle |
| 4 | Sensoreinheit |
| 4.1 | Lichtquelle |
| 4.2 | optoelektrischer Sensor |
| 5 | Prozessor |
| 6 | Zeit- oder Taktgeber |
| 7 | Speicher |
| 8 | Schnittstelle |
| 9 | Impuls |
| | |
| A | Drehrichtung der Welle 3 |

## Patentansprüche

1. Verfahren zur Ermittlung der Geschwindigkeit, insbesondere Geschwindigkeit eines umlaufenden Maschinenelementes, durch Erfassung von voneinander beabstandeten Wegstreckenelementen und unter Berücksichtigung der von einem Taktgeber (6) gelieferten Zeit, **dadurch gekennzeichnet, dass** die Ermittlung der Geschwindigkeit in einem Geschwindigkeitsbereich oberhalb einer Grenzgeschwindigkeit ($V_{Zmax}$) nach einem Frequenzmessverfahren und in einem Geschwindigkeitsbereich unterhalb der Grenzgeschwindigkeit ($V_{Zmax}$) nach einem Zeitmessverfahren erfolgt.

2. Verfahren nach Anspruch 1, **dadurch gekennzeichnet,** **dass** die Wegstreckenelemente jeweils denselben Abstand ($\Delta$s) voneinander aufweisen, und/oder **dass** die Wegstreckenelemente von Inkrementen (2) oder deren Flanken eines Gebers oder Encoders sind, und/oder

**dass** die Wegstreckenelemente an einem umlaufend angetriebenen Inkremententräger, beispielsweise an einer umlaufend angetriebenen Scheibe oder an einer umlaufend angetriebenen Welle (3) vorgesehen sind,
und/oder

**dass** die Wegstreckenelemente berührungslos mit einer Sensoreinheit (4), beispielsweise mit einer Lichtstrecke abgetastet werden.

3. Verfahren nach Anspruch 1 oder 2, **dadurch gekennzeichnet, dass** bei der Ermittlung der Geschwindigkeit mit dem Frequenzmessverfahren die Anzahl (N) der Wegstreckenelemente innerhalb eines vorgegebenen Zeitfensters oder Messintervalls ($T_M$) ermittelt und hieraus unter Berücksichtigung der Länge des Messintervalls ($T_M$) und des Abstandes ($\Delta s$) zwischen den Wegstreckenelementen die Geschwindigkeit bestimmt wird,
und/oder
dass bei der Ermittlung der Geschwindigkeit mit dem Zeitmessverfahren die Zeit (T) zwischen einem anfänglichen Wegstreckenelement und einem zeitlich folgenden Wegstreckenelement ermittelt und aus dieser gemessenen Zeit (T) unter Berücksichtigung des Abstandes ($\Delta s$) der Wegstreckenelemente und der Anzahl (N) der Wegstreckenelemente die Geschwindigkeit (V) bestimmt wird.

4. Verfahren nach einem der vorhergehenden Ansprüche, **dadurch gekennzeichnet, dass** die jeweilige Messung synchron mit der Fassung eines Wegstreckenelementes (2) begonnen wird.

5. Verfahren nach einem der vorhergehenden Ansprüche, **dadurch gekennzeichnet, dass** das Umschalten von dem Frequenzmessverfahren auf das Zeitmessverfahren dann erfolgt, wenn die Anzahl der je Messintervall erfassten Wegstreckenelemente oder der hierbei erzeugten Impulse noch größer als Drei ist.

6. Verfahren nach einem der vorhergehenden Ansprüche, **dadurch gekennzeichnet, dass** beim Erfassen oder Zählen der Wegstreckenelemente von jedem Inkrement (2) jeweils wenigstens ein Impuls (9) gebildet wird, wobei beispielsweise beim Erfassen oder Zählen der Wegstreckenelemente (2) von jedem Inkrement (2) jeweils zwei Impulse (9) gebildet werden.

7. Verfahren nach einem der vorhergehenden Ansprüche, **dadurch gekennzeichnet, dass** der Abstand ($\Delta s$) der Inkremente (2) gleich deren Breite ($\Delta s$) ist.

8. Vorrichtung zur Ermittlung der Geschwindigkeit, insbesondere Geschwindigkeit eines umlaufenden Maschinenelementes, durch Erfassung von voneinander beabstandeten Wegstreckenelementen und unter Berücksichtigung der von einem Taktgeber (6) gelieferten Zeit, **dadurch gekennzeichnet, dass** die Ermittlung der Geschwindigkeit in einem Geschwindigkeitsbereich oberhalb einer Grenzgeschwindigkeit ($V_{Zmax}$) nach einem Frequenzmessverfahren und in einem Geschwindigkeitsbereich unterhalb der Grenzgeschwindigkeit ($V_{Zmax}$) nach einem Zeitmessverfahren erfolgt.

9. Vorrichtung nach Anspruch 8, **dadurch gekennzeichnet,**
**dass** die Wegstreckenelemente jeweils denselben Abstand ($\Delta s$) voneinander aufweisen und/oder dass die Wegstreckenelemente von Inkrementen (2) oder deren Flanken eines Gebers oder Encoders sind,
und/oder

**dass** die Wegstreckenelemente an einem umlaufend angetriebenen Inkremententräger, beispielsweise an einer umlaufend angetriebenen Scheibe oder an einer umlaufend angetriebenen Welle (3) vorgesehen sind,
und/oder

**dass** die Wegstreckenelemente berührungslos mit einer Sensoreinheit (4), beispielsweise mit einer Lichtstrecke abgetastet werden.

10. Vorrichtung nach einem der vorhergehenden Ansprüche, **dadurch gekennzeichnet, dass** bei der Ermittlung der Geschwindigkeit mit dem Frequenzmessverfahren die Anzahl (N) der Wegstreckenelemente innerhalb eines vorgegebenen Zeitfensters oder Messintervalls ($T_M$) ermittelt und hieraus unter Berücksichtigung der Länge des Messintervalls ($T_M$) und des Abstandes ($\Delta s$) zwischen den Wegstreckenelementen die Geschwindigkeit bestimmt wird,
und/oder
dass bei der Ermittlung der Geschwindigkeit mit dem Zeitmessverfahren die Zeit (T) zwischen einem anfänglichen Wegstreckenelement und einem zeitlich folgenden Wegstreckenelement ermittelt und aus dieser gemessenen Zeit (T) unter Berücksichtigung des Abstandes ($\Delta s$) der Wegstreckenelemente und der Anzahl (N) der Wegstreckenelemente die Geschwindigkeit (V) bestimmt wird.

11. Vorrichtung nach einem der vorhergehenden Ansprüche, **dadurch gekennzeichnet, dass** die jeweilige Messung synchron mit der Fassung eines Wegstreckenelementes (2) begonnen wird.

12. Vorrichtung nach einem der vorhergehenden Ansprüche, **dadurch gekennzeichnet, dass** das Umschalten von dem Frequenzmessverfahren auf das Zeitmessverfahren dann erfolgt, wenn die Anzahl der je Messintervall erfassten Wegstreckenelemente oder der hierbei erzeugten Impulse noch größer als Drei ist.

**13.** Vorrichtung nach einem der vorhergehenden Ansprüche, **dadurch gekennzeichnet, dass** beim Erfassen oder Zählen der Wegstreckenelemente von jedem Inkrement (2) jeweils wenigstens ein Impuls (9) gebildet wird, wobei beispielsweise beim Erfassen oder Zählen der Wegstreckenelemente (2) von jedem Inkrement (2) jeweils zwei Impulse (9) gebildet werden.

**14.** Vorrichtung nach einem der vorhergehenden Ansprüche, **dadurch gekennzeichnet, dass** der Abstand (Δs) der Inkremente (2) gleich deren Breite (Δs) ist.

**FIG.1**

**FIG.2**